# EUROPÄISCHE PATENTSCHRIFT

(11) **EP 1 283 629 B1**
(45) Veröffentlichungstag und Bekanntmachung des Hinweises auf die Patenterteilung: **12.07.2006**
(21) Anmeldenummer: 02011884.0
(22) Anmeldetag: 29.05.2002
(51) Int. Cl.: H04L 29/06, G06F 13/10

(54) **Datenübertragungssystem mit Protokollwandler**
Data transmission system with protocol converter
Système de transmission de données avec convertisseur de protocole

(30) Priorität: 09.08.2001 DE 10139245
(43) Veröffentlichungstag der Anmeldung: 12.02.2003
(73) Patentinhaber: VEGA Grieshaber KG, 77709 Wolfach (DE)
(72) Erfinder: Faist, Fridolin, Dipl.-Ing., 77709 Oberwolfach (DE)
(74) Vertreter: Patentanwälte Westphal, Mussgnug & Partner

(56) Entgegenhaltungen:
- DE-A- 19 942 762
- US-A- 6 012 113
- DATA COMM FOR BUSINESS: "PPP-SR" INTERNET, [Online] 1. - 1. März 2000, Seiten 1-19, XP002263693 Gefunden im Internet: <URL:http://www.dcbnet.com/manuals/pppsr.p df> [gefunden am 2003-12-03]
- DATA COMM FOR BUSINESS: "DA-56" INTERNET, [Online] 26. Oktober 2000 (2000-10-26), Seiten 1-16, XP002263692 Gefunden im Internet: <URL:www.dcbnet.com/manuals/da56man.pdf > [gefunden am 2003-12-03]
- DATA COMM FOR BUSINESS: "Conserving IP Addresses with the PPP-SR Simple Router" INTERNET, [Online] 31. Dezember 1997 (1997-12-31), Seiten 1-3, XP002263694 Gefunden im Internet: <URL:http://www.dcbnet.com/notes/9705ppp.h tml> [gefunden am 2003-12-03]
- KALEVI HAUTANIEMI: "Direct cable connection between Win-9x and Linux" INTERNET, [Online] 27. März 2001 (2001-03-27), Seiten 1-4, XP002263695 Gefunden im Internet: <URL:http://oh3tr.ele.tut.fi/~oh3fg/dcc/dc c-en.html> [gefunden am 2003-12-03]

## Beschreibung

Die vorliegende Erfindung betrifft ein Datenübertragungsystem gemäß den Merkmales der Oberbegriffs des Anspruchs 1.

Ein Datenübertragungsystem mit einem Protokollevandler ist aus PPP.SR; Data Comm for Business; 1.3.2000 bekannt.

Jedes herkömmliche Modem stellt einen solchen Protokollwandler dar; es kommuniziert einerseits mit einem ersten datenverarbeitenden Gerät, mit dem es direkt verbunden ist, im allgemeinen einem Computer, nach einem Modemprotokoll, über das Befehle, die die Arbeitsweise des Modems steuern, vom Computer an das Modem übermittelt werden und von dem Computer an ein entferntes zweites datenverarbeitendes Gerät über ein zwischengeschaltetes Fernmeldenetzwerk zu sendende oder von dort empfangene Daten mit dem Computer ausgetauscht werden.

Ein solches Modem erlaubt in Verbindung mit einem geeigneten Anwendungsprogramm auf dem Computer auch die Kommunikation über ein paketorientiertes Datenübertragungsnetz, z.B. gemäß Internet-Protokoll, oder die E-Mail-Übertragung. Andererseits verlangen gängige Kommunikationsprogramme wie etwa Web-Browser oder E-Mail-Programme zwingend das Vorhandensein eines Modems oder eines LAN-Anschlusses, über die die Kommunikation des Computers mit einem zweiten datenverarbeitenden Gerät abgewikkelt werden kann.

Da der Umgang mit derartigen Kommunikationsprogrammen inzwischen einem großen Personenkreis vertraut ist, ist es attraktiv, derartige Programme auch zur Kommunikation zwischen einem Computer und zweiten datenverarbeitenden Geräten einzusetzen, die nicht durch große, nur durch DFÜ-Netze zu überbrückende Entfernungen voneinander getrennt sind, sondern die sich in unmittelbarer Nachbarschaft zueinander befinden können. Ein solches Bedürfnis kann sich z.B. ergeben, wenn die zweiten datenverarbeitenden Geräte Messwertaufnehmer oder Aktoren zur Anwendung in einer Prozesssteuerung sind. Derartige Messwertaufnehmer oder Aktoren können in einer Fertigungsumgebung in großen Entfernungen von einander und von einer zentralen Leitwarte installiert sein, so dass sich zur Kommunikation mit ihnen die Verwendung eines Web-Browsers oder eines E-Mail-Programms in Verbindung mit einem lokalen Netzwerk oder einem Fernmeldenetz als Medium für die Datenübertragung anbietet. Die Inbetriebnahme oder Konfiguration derartiger Geräte gestaltet sich jedoch problematisch, wenn die Kommunikation mit solchen Geräten nur über ein zwischengeschaltetes Modem und DFÜ-Netzwerk oder LAN-Netzwerk möglich ist, da ein Anwender, wenn die Kommunikation mit dem Gerät nicht funktioniert, nur unter Schwierigkeiten herausfinden kann, ob der Grund dafür in dem zweiten Gerät selber oder in dem zur Kommunikation mit ihm verwendeten Medium liegt.

Aufgabe der vorliegenden Erfindung ist, eine Vorrichtung anzugeben, die eine einfache, wenig fehlerträchtige Kommunikation zwischen zwei datenverarbeitenden Geräten ermöglicht, und die insbesondere die Konfiguration von als zweite Endgeräte verwendeten Messwertaufnehmern oder Aktoren vereinfacht.

Die Aufgabe wird gelöst durch eine Datenübertragungsystem mit den Merkmalen des Anspruchs 1.

Erfindungsgemäß wird ein swischengeschaltetes Übertragungsnetzwerkvermichen. Das Übertragungsnetzwerk wird so als Fehlerquelle bei der Kommunikation zwischen den zwei datenverarbeitenden Geräten ausgeschlossen. Ein Benutzer, der mit Hilfe eines Computers als erstes datenverarbeitendes Gerät und des erfindungsgemäßen Protokollwandlers versucht, ein zweites datenverarbeitendes Gerät zu konfigurieren, kann daher gewiss sein, dass der Grund für ein eventuelles unerwartetes Verhalten des zweiten Gerätes in diesem Gerät selbst bzw. den zu seiner Konfiguration an es geschickten Informationen, nicht aber in der Art und Weise der Übertragung dieser Informationen zu suchen ist. Da das Verhalten des Protokollwandlers gegenüber dem ersten datenverarbeitenden Gerät das Verhalten eines Modems nachbildet, ermöglicht es, wenn das erste datenverarbeitende Gerät ein Computer ist, auf diesem die Nutzung von Kommunikationsprogrammen, wie etwa Browsern oder Mail-Programmen, die das Vorhandensein eines Modems verlangen.

Um eine Verbindung mit einem zweiten Gerät über ein Modem zu Stande kommen zu lassen, muss herkömmlicherweise das erste Gerät eine Anweisung nach dem Modemprotokoll an das Modem senden, die eine Rufnummer spezifiziert, unter der das zweite Gerät erreichbar ist. Eine solche Rufnummer wird nicht benötigt, wenn das zweite Gerät direkt an den erfindungsgemäßen Protokollwandler angeschlossen ist. Der Protokollwandler verwirft daher zweckmäßigerweise eine solche Anweisung und gibt an das erste Endgerät eine Meldung zurück, die diesem das Zustandekommen einer Verbindung mit der Rufnummer bestätigt. Dem ersten Endgerät wird so vorgespiegelt, dass die Kommunikation mit dem zweiten Endgerät über eine Fernmeldeverbindung stattfindet, während dies in Wirklichkeit nicht der Fall ist.

Einer ersten Ausgestaltung des Protokollwandlers zufolge kann vorgesehen werden, dass dieser das Zustandekommen der Verbindung für jede beliebige in der empfangenen Anweisung spezifizierbare Rufnummer bestätigt. D.h. der Protokollwandler unterstützt den Datenaustausch zwischen dem Computer und dem zweiten datenverarbeitenden Gerät unterschiedslos und unabhängig davon, welches die spezifizierte Rufnummer ist. Diese Ausgespaltung gibt dem Anwender völlige Gewissheit, dass Daten, die der Computer nach Empfang der Bestätigung über das Zustande kommen der Verbindung an das zweite Endgerät sendet, tatsächlich auch an dieses weitergegeben werden.

Alternativ kann vorgesehen werden, dass der Protokollwandler das Zustandekommen der Verbindung nur für eine endliche Zahl von in der empfangenen Anweisung spezifizierbaren Rufnummern bestätigt. Dies erlaubt es, eine Mehrzahl von Protokollwandlern parallel mit einem Anschluss des Computers zu verbinden und mit an diese Protokollwandler angeschlossenen zweiten Geräten jeweils selektiv zu kommunizieren.

Die Erfindung betrifft ferner ein Datenübertragungssystem, in dem zwei datenverarbeitende Geräte durch einen Protokollwandler wie oben beschrieben verbunden sind.

Weitere Merkmale und Vorteile der Erfindung ergeben sich aus der nachfolgenden Beschreibung von Ausführungsbeispielen mit Bezug auf die beigefügten Figuren. Es zeigen:
- Figs.1 und 2: zeigen jeweils Ausführungsbeispiele eines Datenübertragungssystems mit einem Protokollwandler gemäß der vorliegenden Erfindung.
- Fig. 3: zeigt ein Ausführungsbeispiel eines Protokollwandlers

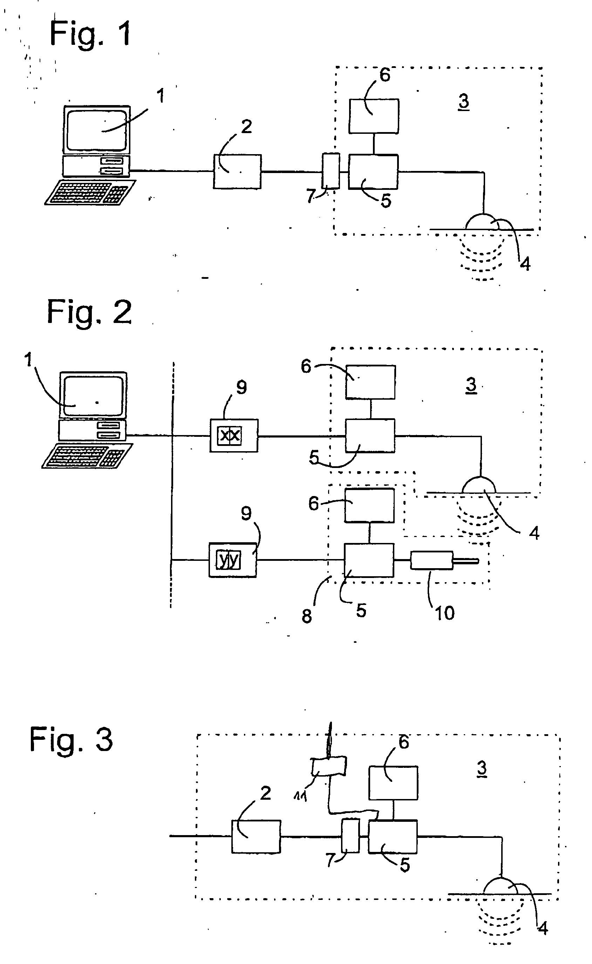

Das Datenübertragungssystem der Fig. 1 umfasst als erstes datenverarbeitendes Gerät einen Arbeitsplatzcomputer 1, der mit einem Protokollwandler 2 über eine serielle Schnittstelle, z. B.eine RS232- oder USB-Schnittstelle, verbunden ist. Eine solche Schnittstelle ist in den meisten Arbeitsplatzrechnern für die Kommunikation mit einer Maus, einem Modem oder anderen Peripheriegeräten eingebaut. In dem Arbeitsplatzcomputer 1 ist ein herkömmliches Kommunikationsprogramm wie etwa ein E-Mail-Programm oder ein Web-Browser ausführbar, das in der Lage ist, nach einem Modemprotokoll auf die serielle Schnittstelle und über diese auf den Protokollwandler zuzugreifen. Die Kommunikation zwischen dem Arbeitsplatzcomputer 1 und dem Protokollwandler 2 kann z.B. mit dem allgemein bekannten Hayes-Befehlssatz ablaufen.

Ein zweiten datenverarbeitendes Gerät 3 umfasst einen Sensor 4 zum Erfassen einer Messgröße und zum Liefern eines für die Messgröße repräsentativen Signals, einen Mikroprozessor 5, einem Speicher 6, der Arbeitsprogramme für den Mikroprozessor 5 sowie eine oder mehrere Text- oder HTML-Dateien enthält, und eine Schnittstelle 7 für die Kommunikation mit dem Protokollwandler 2 nach einem paketorientierten Protokoll, insbesondere dem Internet-Protokoll.

Auf dem Arbeitsplatzcomputer ist ein Web-Browser wie etwa Microsoft Internet Explorer oder Netscape Navigator oder ein E-Mail-Programm wie etwa Microsoft Outlook ausführbar.

Ein solches Programm setzt herkömmlicherweise die Existenz eines Modems an einem der seriellen Anschlüsse des Arbeitsplatzcomputers 1 voraus und versucht, über diesen Anschluss ein daran vermutetes Modem anzusprechen, um über eine Telefonleitung eine Verbindung zu einem Internet-Service-Provider aufzubauen, der durch eine Rufnummer gekennzeichnet ist, die der Arbeitsplatzcomputer 1 in einem Modembefehl an dem seriellen Anschluss ausgibt. Dieser Befehl wird vom Protokollwandler 2 empfangen. Dieser versucht nicht, eine Fernmeldeverbindung herzustellen, da er dazu gar nicht in der Lage ist. Statt dessen sendet er eine Bestätigungsnachricht an den Arbeitsplatzcomputer 1, der diesem das Zustandekommen der gewünschten Fernmeldeverbindung vorspiegelt. Im Anschluss daran können Daten zwischen dem Arbeitsplatzcomputer 1 und dem zweiten Gerät 3 ausgetauscht werden, insbesondere können HTML-Seiten aus dem Speicher 6 an den Arbeitsplatzcomputer 1 übertragen werden, um dort, von dem Web-Browser dargestellt, eine Eingabemaske zu bilden, in die ein Benutzer für die Konfiguration des Geräts 3 benötigte Daten eintragen kann. Eine andere Möglichkeit zum Konfigurieren des Geräts 3 ist, dass dieses jeweils einen im Speicher 6 gespeicherten Text als E-Mail an den Arbeitsplatzcomputer 1 überträgt, und der Benutzer als Antwort auf den vom Arbeitsplatzcomputer 1 angezeigten Text einen Parameterwert in den Arbeitsplatzcomputer 1 eingibt und wiederum als E-Mail an das Gerät 3 sendet.

Die Konfiguration des Geräts 3 kann daher stattfinden, ohne dass hierfür ein speziell auf das Gerät 3 zugeschnittenes Programm auf dem Arbeitsplatzcomputer 1 installiert werden muss. Dies spart nicht nur Speicherplatz am Arbeitsplatzcomputer 1, es ist darüber hinaus auch sichergestellt, dass jedes zu konfigurierende Gerät 3 mit der korrekten Eingabemaske konfiguriert wird. Fehler durch versehentliche Verwendung eines falschen Konfigurationsprogramms oder einer falschen Programmversion sind ausgeschlossen.

Der Protokollwandler 2 der Fig. 1 ist nicht selektiv hinsichtlich der vom Arbeitsplatzcomputer signalisierten Rufnummer. D.h. unabhängig davon, welche Rufnummer in einem Modembefehl vom Arbeitsplatzcomputer 1 übermittelt wird, beantwortet der Protokollwandler 2 diesen Befehl immer mit einer Bestätigung des Zustandekommens der Verbindung und gibt anschließend vom Arbeitsplatzcomputer 1 empfangene Nutzdaten an das angeschlossene Gerät 3 weiter.

Beim Ausführungsbeispiel der Fig. 2 sind zwei zweite Geräte 3, 8 über parallele rufnummernselektive Protokollwandler 9 mit dem seriellen Anschluss des Arbeitsplatzcomputers 1 verbunden.

Die Rufnummernselektivität bedeutet, dass die Protokollwandler 9 nur dann einen Modembefehl zum Herstellen einer Verbindung mit einer Bestätigung des Zustandekommens der Verbindung beantworten, wenn dieser Befehl die dem Protokollwandler 9 zugeordnete Rufnummer xx oder yy oder eine aus einer Mehrzahl von diesem zugeordneten Rufnummern enthält. Die Rufnummernselektivität des Protokollwandlers erlaubt den parallelen Betrieb mehrerer Protokollwandler am gleichen seriellen Anschluss des Arbeitsplatzcomputers 1 oder, parallel zu einem oder mehreren Protokollwandlern 9, den eines herkömmlichen Modems. Wenn eines der an die Protokollwandler 9 angeschlossenen zweiten Geräte, hier das Gerät 8, einen vom Mikroprozessor 5 mit Hilfe von an das Gerät gesendeten Befehlen gesteuerten Aktor 10 umfasst, der auf die vom Sensor 4 des Geräts 2 erfasste Größe einwirkt, so kann durch selektives Ansprechen der zwei Geräte 3, 8 deren Funktionsfähigkeit im Detail getestet werden.

Wie in Fig. 3 symbolisch dargestellt, können das zweite Gerät und der dazugehörige Protokollwandler zu einer durch ein strich-punktiertes Rechteck symbolisierten Baueinheit verbunden sein. In einem solchen Fall ist es zweckmäßig, wenn die Baueinheit auch über einen Anschluss 11 für die direkte Kommunikation mit dem Mikroprozessor 5 nach dem Paketprotokoll unter Umgehung des Wandlers 2 verfügt, um so die Nutzbarkeit des Geräts sowohl in direkter Verbindung mit dem Arbeitsplatzcomputer 1 als auch über ein Paketdatennetz zu gewährleisten.

Bei der obigen Beschreibung eines Ausführungsbeispiels ist zwar davon ausgegangen, dass der Protokollwandler 2 im wesentlichen in einer Erprobungs- und Konfigurationsphase des zweiten Geräts 3 genutzt wird, und dass dieses, wenn es nach Abschluss dieser Phase in ein ausgedehntes Netzwerk zur Überwachung und Steuerung einer Fertigung eingesetzt wird, mit diesem Netzwerk nach dem Paketprotokoll kommuniziert. Selbstverständlich kann aber auch im Anschluss an Prüfung und/oder Konfiguration das zweite Gerät weiterhin, auch zum Messen bzw. Steuern, über einen Protokollwandler 2 oder 9 betrieben werden, sofern die geometrischen Randbedingungen der Anwendung dies zweckmäßig erscheinen lassen.

## Patentansprüche

1. Datenübertragungssystem mit einem Personalcomputer (1) und einem als Messwertaufnehmer ausgebildeten, datenverarbeitenden Gerät (3), die beide durch einen Protokollwandler (2) miteinander verbunden sind,
**dadurch gekennzeichnet , dass**
- der Protokollwandler (2) direkt an eine serielle Schnittstelle des Personalcomputers (1), an die gewöhnlicherweise ein Modem anzuschließen ist, und direkt an eine Schnittstelle des Messwertaufnehmers (3), welche nach einem paketorientierten Protokoll kommuniziert, angeschlossen ist, und dass
- der Protokollwandler (2) dazu vorgesehen ist, unselektiv auf eine in einem Modembefehl eines Web-Browsers übertragene Telefonnummer mit einer Bestätigung an den Personalcomputer (1) zu antworten und anschließend eine Datenübertragung vom Personalcomputer (1) zum Messwertaufnehmer (3) unter Vermeidung eines zwischengeschalteten Übertragungsnetzwerkes durchzuführen.

2. Datenübertragungssystem nach Anspruch 1,
**dadurch gekennzeichnet, dass** der Protokollwandler (2) das Zustandekommen der Verbindung für jede beliebige in der empfangenen Anweisung spezifizierbare Rufnummer bestätigt.

3. Datenübertragungssystem nach Anspruch 2,
**dadurch gekennzeichnet, dass** der Protokollwandler (2) das Zustandekommen der Verbindung für eine endliche Zahl von in der empfangenen Anweisung spezifizierbaren Rufnummern bestätigt.

## Claims

1. A data transmission system having a personal computer
(1) and a data processing device (3) constructed as a transducer, which are both connected to each other by a protocol converter (2),
**characterised in that**
- the protocol converter (2) is connected directly to a serial interface of the personal computer (1) to which a modem is normally to be connected, and directly to an interface of the transducer (3) which communicates according to a packet-oriented protocol,
and **in that**
- the protocol converter (2) is provided to reply in non-selective manner to a telephone number transmitted in a modem command of a web browser with a confirmation to the personal computer (1) and then to perform a data transmission from the personal computer (1) to the transducer (3) whilst avoiding an intermediate transmission network.

2. A data transmission system according to Claim 1,
**characterised in that** the protocol converter (2) confirms the establishment of the connection for any call number that can be specified in the received instruction.

3. A data transmission system according to Claim 2,
**characterised in that** the protocol converter (2) confirms the establishment of the connection for a finite number of call numbers that can be specified in the received instruction.

## Revendications

1. Système de transmission de données avec un PC (1) et un appareil traitant les données (3) conçu sous forme de transmetteur de mesure, tous deux étant reliés l'un à l'autre par un convertisseur de protocole (2),
**caractérisé en ce que**
- le convertisseur de protocole (2) est raccordé directement à une interface série du PC (1) à laquelle doit être raccordé habituellement un modem et directement à une interface du transmetteur de mesure (3) qui communique suivant un protocole orienté paquet, et
- le convertisseur de protocole (2) est prévu pour répondre de manière non sélective par une confirmation au PC (1) à un numéro de téléphone transféré dans un ordre de modem d'un navigateur Web et finalement pour effectuer une transmission de données du PC (1) au transmetteur de mesure (3) en évitant un réseau de transmission intercalé.

2. Système de transmission de données selon la revendication 1,
**caractérisé en ce que**
le convertisseur de protocole (2) confirme l'établissement de la liaison pour chaque numéro d'appel quelconque spécifié dans l'instruction reçue.

3. Système de transmission de données selon la revendication 2,
**caractérisé en ce que**
le convertisseur de protocole (2) confirme l'établissement de la liaison pour un entier naturel des numéros d'appel pouvant être spécifiés dans l'instruction reçue.
